# EUROPÄISCHE PATENTSCHRIFT

(11) **EP 1 212 133 B1**
(45) Veröffentlichungstag und Bekanntmachung des Hinweises auf die Patenterteilung: **10.09.2003**
(21) Anmeldenummer: 00926852.5
(22) Anmeldetag: 10.04.2000
(51) Int. Cl.: B01J 19/00, B01L 3/02, F04B 19/00

(54) **VORRICHTUNG UND VERFAHREN ZUM AUFBRINGEN EINER MEHRZAHL VON MIKROTRÖPFCHEN AUF EIN SUBSTRAT**
METHOD AND DEVICE FOR APPLYING A PLURALITY OF MICRODROPLETS ONTO A SUBSTRATE
DISPOSITIF ET PROCEDE POUR DEPOSER UNE PLURALITE DE MICROGOUTTELETTES SUR UN SUBSTRAT

(30) Priorität: 02.09.1999 DE 19941871
(43) Veröffentlichungstag der Anmeldung: 12.06.2002
(73) Patentinhaber: HAHN-SCHICKARD-GESELLSCHAFT FÜR ANGEWANDTE FORSCHUNG E.V., D-78052 Villingen-Schwenningen (DE)
(72) Erfinder: GRUHLER, Holger, D-78609 Tuningen (DE); HEY, Nicolaus, D-78664 Eschbronn-Mariazell (DE); SANDMAIER, Hermann, D-78052 Obereschach (DE); ZENGERLE, Roland, D-78050 Villingen-Schwenningen (DE)
(74) Vertreter: Schoppe, Fritz, Dipl.-Ing.
(86) Internationale Anmeldenummer: EP0003173
(87) Internationale Veröffentlichungsnummer: WO01017669

(56) Entgegenhaltungen:
- WO-A-97/45730
- WO-A-98/51999
- US-A- 5 508 200
- US-A- 5 551 487
- US-A- 5 681 484
- US-A- 5 847 105

## Beschreibung

Die vorliegende Erfindung bezieht sich auf eine Vorrichtung und ein Verfahren zum Aufbringen einer Mehrzahl von Mikrotröpfchen auf ein Substrat, und insbesondere auf eine solche Vorrichtung und ein solches Verfahren, die das gleichzeitige Aufbringen der Mehrzahl von Mikrotröpfchen ermöglichen. Speziell bezieht sich die vorliegende Erfindung auf solche Vorrichtungen und Verfahren, die geeignet sind, sogenannte Biochips, bei denen eine Mehrzahl unterschiedlicher Analyte auf ein Substrat aufgebracht ist, um unterschiedliche Stoffe in einer unbekannten Probe nachzuweisen, zu erzeugen.

Die zunehmende Entschlüsselung der Genome von Menschen, Tieren und Pflanzen schafft eine Vielzahl neuer Möglichkeiten, von der Diagnose von genetisch bedingten Krankheiten bis hin zur wesentlich beschleunigten Suche nach pharmazeutisch interessanten Wirkstoffen. So werden beispielsweise die oben genannten Biochips künftig eingesetzt werden, um Lebensmittel hinsichtlich einer Vielzahl möglicher, gentechnisch veränderter Bestandteile zu untersuchen. In einem weiteren Anwendungsgebiet können derartige Biochips verwendet werden, um bei genetisch bedingten Krankheiten den genauen Gendefekt festzustellen, um daraus die ideale Strategie zur Behandlung der Krankheit abzuleiten.

Die Biochips, die für derartige Anwendungen verwendbar sind, bestehen in der Regel aus einem Trägermaterial, d.h. einem Substrat, auf welches eine Vielzahl unterschiedlicher Substanzen in Form eines Rasters, aufgebracht wird. Typische Rasterabstände in dem Array liegen zwischen 100 µm und 1.000 µm. Die Vielfalt der unterschiedlichen Substanzen, die als sogenannte Analyte bezeichnet werden, auf einem Biochip reicht je nach Anwendung von einigen wenigen unterschiedlichen Stoffen bis hin zu einigen 100.000 verschiedenen Stoffen pro Substrat. Mit jedem dieser unterschiedlichen Analyte kann ein ganz bestimmter Stoff in einer unbekannten Probe nachgewiesen werden.

Bringt man eine unbekannte Probenflüssigkeit auf einen Biochip auf, so treten bei bestimmten Analyten Reaktionen auf, die über geeignete Verfahren, beispielsweise eine Fluoreszenzerfassung detektiert werden können. Die Anzahl der unterschiedlichen Analyte auf dem Biochip entspricht dabei der Anzahl der unterschiedlichen Bestandteile in der unbekannten Probenflüssigkeit, die mit dem jeweiligen Biochip gleichzeitig analysiert werden können. Bei einem solchen Biochip handelt es sich somit um ein Diagnosewerkzeug, mit welchem eine unbekannte Probe gleichzeitig und gezielt hinsichtlich einer Vielzahl von Inhaltsstoffen untersucht werden kann.

Zum Aufbringen der Analyte auf ein Substrat, um einen solchen Biochip zu erzeugen, sind derzeit drei grundsätzlich verschiedene Verfahren bekannt. Diese Verfahren werden alternativ je nach benötigter Stückzahl der Biochips bzw. nach notwendiger Analytenzahl pro Chip eingesetzt.

Das erste Verfahren wird als "Contactprinting" bezeichnet, wobei bei diesem Verfahren ein Bündel aus Stahlkapillaren verwendet wird, die im Inneren mit verschiedenen Analyten gefüllt sind. Dieses Bündel aus Stahlkapillaren wird auf das Substrat gestempelt. Beim Abheben des Bündels bleiben die Analyte in Form von Mikrotröpfchen an dem Substrat haften. Bei diesem Verfahren wird die Qualität des Druckmusters allerdings sehr stark durch die Wirkung von Kapillarkräften bestimmt und hängt dadurch von einer Vielzahl von kritischen Parametern ab, beispielsweise der Qualität und der Beschichtung der Oberfläche des Substrats, der genauen Geometrie der Düse und vor allem von den verwendeten Medien. Daneben ist das Verfahren sehr anfällig gegenüber Verunreinigungen des Substrats sowie der Düsen. Dieses eben beschriebene Verfahren eignet sich bis zu einer Analytenvielfalt von einigen 100 pro Substrat.

Bei einem zweiten Verfahren zum Erzeugen von Biochips, dem sogenannten "Spotting" werden meist sogenannte Mikrodispenser eingesetzt, die ähnlich wie Tintendrucker in der Lage sind, einzelne Mikrotröpfchen einer Flüssigkeit auf einen entsprechenden Steuerbefehl hin auf ein Substrat zu schießen. Ein solches Verfahren wird als "drop-on-demand" bezeichnet. Solche Mikrodispenser sind von einigen Firmen kommerziell erhältlich. Der Vorteil bei diesem Verfahren liegt darin, daß die Analyte berührungslos auf ein Substrat aufgebracht werden können, wobei der Einfluß von Kapillarkräften bedeutungslos ist. Ein wesentliches Problem besteht jedoch darin, daß es sehr teuer und überaus schwierig ist, eine Vielzahl von Düsen, die alle mit unterschiedlichen Medien versorgt werden, parallel, bzw. in einem Array, anzuordnen. Das limitierende Element ist hierbei die Aktorik sowie die Medienlogistik, die nicht in dem gewünschten Maße miniaturisierbar sind.

Als ein drittes Verfahren zur Herstellung von Biochips wird derzeit das sogenannte "Syntheseverfahren" verwendet, bei dem die Analyte, die in der Regel aus einer Kette aneinanderhängender Nukleinsäuren bestehen, chemisch auf dem Substrat hergestellt, also synthetisiert werden. Zur Abgrenzung der räumlichen Position der unterschiedlichen Analyte werden Verfahren verwendet, wie sie aus der Mikroelektronik bekannt sind, beispielsweise Lithographieverfahren mit Maskentechnik. Dieses Syntheseverfahren ist unter den genannten Verfahren mit Abstand das teuerste, wobei jedoch die größte Analytenvielfalt auf einem Chip herstellbar ist, in der Größenordnung von 100.000 verschiedenen Analyten pro Substrat.

Aus der WO 9851999 A ist ein Druckarray unter Verwendung von elektrohydrodynamischen Pumpen bekannt. Gemäß dieser Schrift ist in einer Dispensierschicht eine Mehrzahl von Ausstoßöffnungen vorgesehen, die über Fluidkanäle in einer Verteilungsschicht mit Reservoiren in einer Reservoirschicht verbunden sind. Für jede Ausstoßöffnung ist eine Mikropumpe in einem benachbart zu der Ausstoßöffnung angeordneten Kanal vorgesehen, wobei die Mikropumpen jeweils Elektrodenpaare aufweisen, um ein elektrisches Feld an den Kanal anzulegen, um durch das Anlegen einer Potentialdifferenz eine Bewegung des auszustoßenden Fluids zu bewirken.

Die WO 9745730 A bezieht sich auf Verfahren und Vorrichtungen, um Lösungen zu einem Array von Zellen zuzuführen. Zu diesem Zweck wird ein Array von Zellen auf einem Substrat gebildet. Ein weiteres Substrat besitzt Ausnehmungen und mit den Ausnehmungen verbundene Kanäle, die es ermöglichen, ein Fluid in die Ausnehmungen zu liefern. Die Zellen werden nun in die Ausnehmungen eingebracht, woraufhin Lösungen durch die Kanäle in die Ausnehmungen zugeführt werden, um die Zellen zu behandeln.

Die US 5508200 A bezieht sich auf Systeme zum Durchführen von chemischen Analysen, wobei kleine Volumina von Proben/Reagenz-Kombinationen auf diskrete Orte eines Substrats aufgebracht werden. Zu diesem Zweck lehrt diese Schrift die Verwendung von Dispensierstationen, die eine Mehrzahl von Kapillarröhren umfassen, die an der unteren Oberfläche eines Hohlraums enden, der mittels einer verschiebbaren Platte mit den Durchführungen der Kapillarröhren fluidmäßig verbindbar oder von denselben fluidmäßig trennbar ist. Ferner ist ein Steuerventil vorgesehen, das es ermöglicht, den Hohlraum unter Druck zu setzen. Im Betrieb werden die äußeren Enden der Kapillarenden zunächst in ein Reagenz eingetaucht, um dieselben durch eine Kapillarwirkung zu befüllen, wobei das andere Ende der Kapillarröhren durch die verschiebbare Platte geschlossen ist. Nachfolgend wird die Dosiereinrichtung an einen Ort, an denen das Reagenz ausgestoßen werden soll, bewegt, woraufhin die fluidmäßige Verbindung zwischen Hohlraum und Kapillarröhre geöffnet und der Hohlraum unter Druck gesetzt wird. Dadurch werden die Reagenzien gleichzeitig aus den einzelnen Kapillarröhren ausgestoßen.

Der vorliegenden Erfindung liegt die Aufgabe zugrunde, Vorrichtungen zum Aufbringen einer Mehrzahl von Mikrotröpfchen auf ein Substrat zu schaffen, die es ermöglichen, Mikrotröpfchen gleichzeitig in einem regelmäßigen Muster kostengünstig und exakt auf ein Substrat aufzubringen, sowie ein Verfahren zur Verwendung bei der Herstellung einer solchen Vorrichtung zu schaffen.

Diese Aufgabe wird durch Vorrichtungen nach den Ansprüchen 1 und 20 und ein Verfahren nach Anspruch 22 gelöst.

Die vorliegende Erfindung basiert auf der Erkenntnis, daß es möglich ist, gleichzeitig eine Mehrzahl von Mikrotröpfchen auf ein Substrat aufzubringen, indem durch ein gemeinsames Puffermedium gleichzeitig ein Druck auf an Düsenöffnungen angeordneten Flüssigkeitssäulen ausgeübt wird. Das Puffermedium ist vorzugsweise inert dahingehend, daß ein über dasselbe aufgeprägter kurzer Druckpuls homogen an die Flüssigkeitssäulen sämtlicher Düsen weitergegeben wird, und daß ferner eine Vermischung unterschiedlicher an die Düsenöffnungen anliegender Medien verhindert ist, d.h. daß das Puffermedium Dosierungsmedien-trennende Eigenschaften aufweist.

Erfindungsgemäß können die Düsenöffnungen bzw. die Düsen in dem gleichen gegenseitigen Abstand zueinander angeordnet sein, in dem auch die Fluidtropfen auf das Substrat aufgebracht werden sollen. Wenn die Düsen sehr nahe zueinander angeordnet sein sollen, ist vorzugsweise jede Düse durch eine eigene Medienleitung mit einem größeren, außenliegenden Reservoir verbunden, über welches jede Düse bzw. jede Düsenöffnung mit einer bestimmten Flüssigkeit versorgt werden kann. Liegen die Düsen jedoch weit genug auseinander, daß sie mit konventionellen Verfahren, beispielsweise mittels Standard-Pipettierautomaten, mit Flüssigkeit versorgt werden können, kann auf die Medienleitungen sowie die Flüssigkeitsreservoire verzichtet werden, wobei dann das Flüssigkeitsreservoir direkt über der Düse angeordnet sein kann.

Um das erfindungsgemäße Puffermedium mit einem Druckpuls zu beaufschlagen, wird bei bevorzugten Ausführungsbeispielen der vorliegenden Erfindung eine Membran mit zugeordnetem Aktor verwendet. Jedoch kann der Druckpuls auch auf jegliche denkbare andere Art erzeugt werden, beispielsweise indem durch ein chemisches oder thermisches Ereignis ein Überdruck in der Druckkammer, in der sich das Puffermedium befindet, erzeugt wird. Beispielsweise kann ein Stößel mit einem zugeordneten Aktor verwendet werden. Ferner ist es möglich, daß die Druckerzeugungseinrichtung eine Druckluftzuführungseinrichtung aufweist, die mit der Druckkammer in fluidmäßiger Verbindung ist.

Erfindungsgemäß wirkt der erzeugte schnelle Druckpuls homogen auf alle Düsen und beschleunigt die in den Düsen enthaltene Flüssigkeit. Somit können gleichzeitig Mikrotröpfchen aus einer Mehrzahl von Düsenöffnungen ausgestoßen werden. Daneben verhindert das erfindungsgemäße Puffermedium, daß beim Aufbringen unterschiedlicher zu dosierender Medien auf ein Substrat eine Vermischung dieser Medien stattfindet.

Erfindungsgemäß wird die Flüssigkeitssäule an den Düsenöffnungen vorzugsweise dadurch erzeugt, daß die Düsenöffnung das äußere Ende eines durch eine Kapillarwirkung befüllbaren Kanals ist, wobei in dem Kanal die Flüssigkeitssäule gebildet wird. Dieser Kanal ist dann vorzugsweise mit der Fluidverbindungsleitung zu einem Flüssigkeitsreservoir verbunden, derart, daß stets eine kapillare Befüllung des Kanals realisiert werden kann.

Die vorliegende Erfindung schafft somit Vorrichtungen und Verfahren, durch die Mikrotröpfchen, insbesondere von biologisch relevanten Stoffen, erzeugt und in einem regelmäßigen Muster auf ein Substrat aufgebracht werden können. Ferner schafft die vorliegende Erfindung einen Dosierkopf für eine solche Vorrichtung zum Aufbringen einer Mehrzahl von Mikrotröpfchen auf ein Substrat und ein Verfahren, das vorteilhaft bei der Herstellung eines solchen Dosierkopfes verwendet werden kann.

Weiterbildungen der vorliegenden Erfindung sind in den abhängigen Ansprüchen dargelegt.

Bevorzugte Ausführungsbeispiele der vorliegenden Erfindung werden nachfolgend bezugnehmend auf die beiliegenden Zeichnungen näher erläutert. Es zeigen:
- Fig. 1: schematisch eine Querschnittansicht eines Ausführungsbeispiels einer erfindungsgemäßen Vorrichtung;
- Fig. 2: schematisch eine Querschnittansicht eines bei der Vorrichtung von Fig. 1 verwendeten Siliziumsubstrats;
- Fig. 3: schematisch eine Unteransicht des in Fig. 2 gezeigten Substrats;
- Fig. 4: schematisch eine Draufsicht des in Fig. 2 gezeigten Substrats;
- Fig. 5: eine schematische Querschnittansicht zur Erläuterung eines alternativen Ausführungsbeispiels einer erfindungsgemäßen Vorrichtung;
- Fig. 6, 7 und 8: schematisch Querschnittansichten weiterer Ausführungsbeispiele von erfindungsgemäßen Vorrichtungen;
- Fig. 9A und 9B: eine schematische Unteransicht und eine schematische Querschnittansicht zur Erläuterung eines Ausführungsbeispiels einer Düsenöffnungsausgestaltung;
- Fig. 10: eine schematische vergrößerte Ansicht eines Abschnitts a in Fig. 6;
- Fig. 11: eine schematische Darstellung eines Flüssigkeitsreservoirs gemäß einem Ausführungsbeispiel der vorliegenden Erfindung; und
- Fig. 12: eine schematische Darstellung zur Veranschaulichung des erfindungsgemäßen Verfahrens zur Herstellung einer Fluiddurchführung von einer Vorderseite zu einer Rückseite eines Fluidiksubstrats.

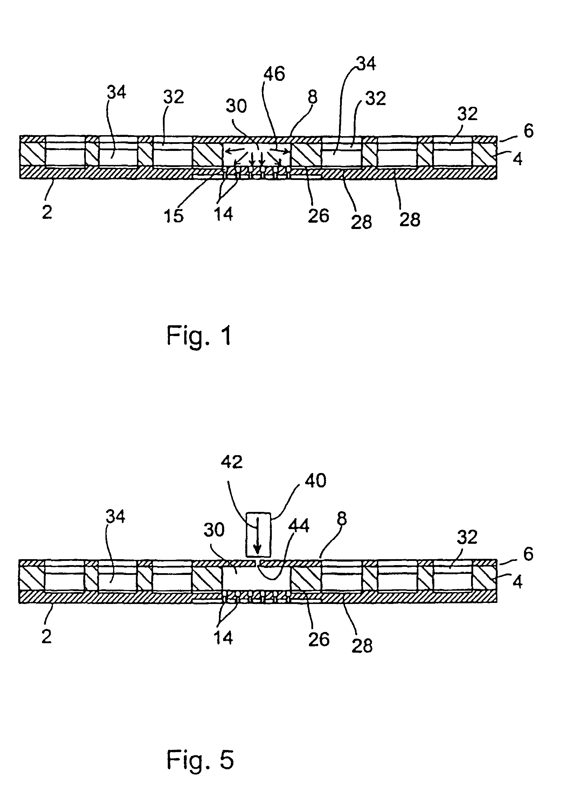

Wie in Fig. 1 zu erkennen ist, besteht das dargestellte Ausführungsbeispiel einer erfindungsgemäßen Vorrichtung zum Aufbringen einer Mehrzahl von Mikrotröpfchen auf ein Substrat aus einem strukturierten Siliziumsubstrat 2, einer auf das Siliziumsubstrat 2 aufgebrachten Zwischenplatte 4, sowie einer auf die Zwischenplatte 4 aufgebrachten Schicht 6, in der eine Druckerzeugungsvorrichtung in der Form einer Verdrängermembran 8 gebildet ist.

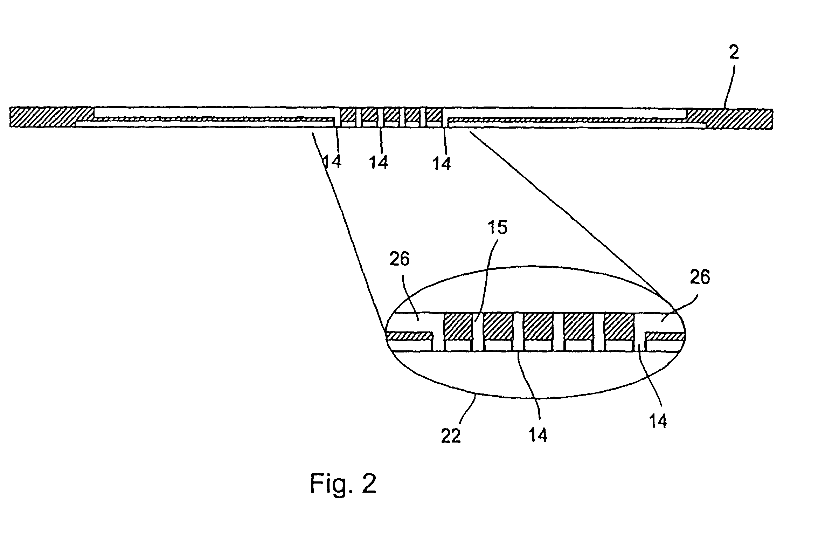

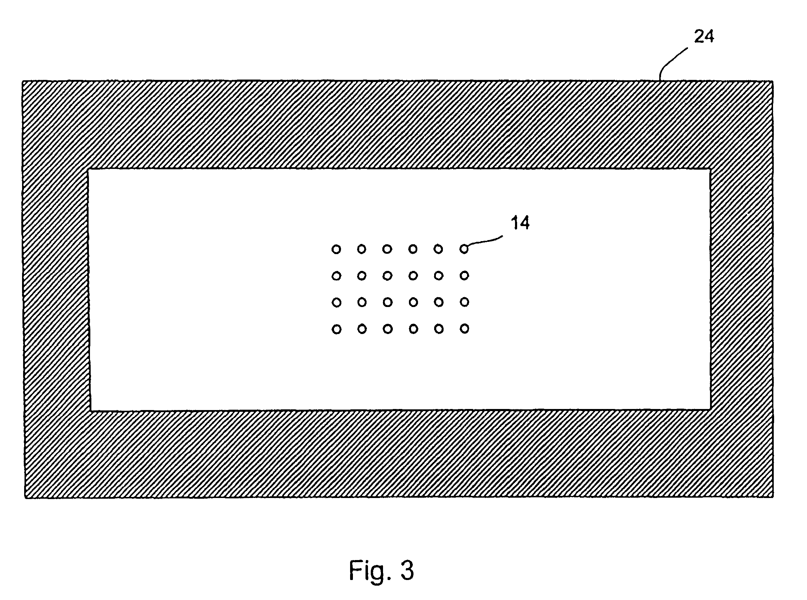

Zunächst wird der Aufbau des Siliziumsubstrats 2 insbesondere bezugnehmend auf die Fig. 2-4, die jeweils vergrößerte Ansichten dieses Siliziumsubstrats 2 darstellen, näher erläutert. Wie zu erkennen ist, sind in einer Unterseite des Siliziumsubstrats 2 eine Mehrzahl von Düsen gebildet, die untere Düsenöffnungen 14 aufweisen. Die Düsen besitzen vorzugsweise eine solche Größe, daß eine kapillare Befüllung derselben möglich ist, wobei dieselben ferner derart in der Unterseite des Chips 2 mikrostrukturiert sind, daß sie gegenüber der umgebenden Siliziumoberfläche exponiert sind. In den Figuren sind sechs nebeneinander angeordnete Düsen dargestellt, wobei eine Unteransicht des Siliziumchips 2 mit den in der Unterseite desselben strukturierten Düsenöffnungen 14 in Fig. 3 gezeigt ist, wobei zu sehen ist, daß das dargestellte Ausführungsbeispiel vierundzwanzig Düsen enthält. Wie ebenfalls zu erkennen ist, sind die Düsen gegenüber der umgebenden Siliziumoberfläche exponiert, wobei die Umrandung 24 den äußeren Rand des Siliziumchips 2 darstellt. Hierbei sei angemerkt, daß die Umrandung bei der Darstellung von Fig. 3 gegenüber der Darstellung von Fig. 1 eine verringerte Breite aufweist.

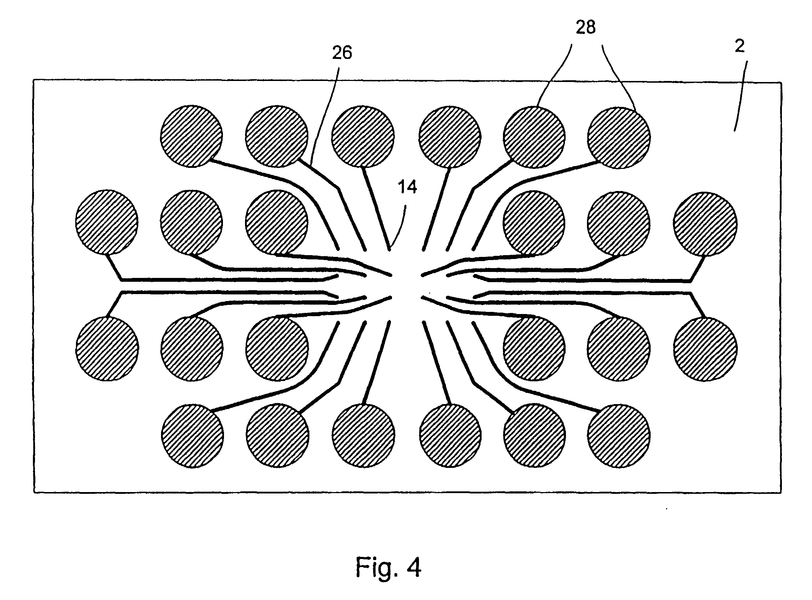

Über den Düsenöffnungen 14 der Düsen sind jeweils Kanäle 15 angeordnet, über die eine Flüssigkeitssäule über der jeweiligen Düsenöffnung 14 festlegbar ist. Die jeweiligen Düsen sind über Medienleitungen 26, die insbesondere in Fig. 4 sowie dem vergrößerten Abschnitt 22 in Fig. 2 zu erkennen sind, mit Medienreservoiren 28, die in der Oberfläche des Siliziumchips 2 gebildet sind, verbunden. Hierbei sei angemerkt, daß in den Querschnittansichten der Fig. 1 und 2 jeweils nur zwei Medienleitungen 26 zu erkennen sind. Wie in Fig. 4 zu erkennen ist, sind vierundzwanzig Medienreservoire 28 über Medienleitungen 26 mit den jeweiligen Düsen des Siliziumchips 2 verbunden.

Die Medienreservoire 28 sind bei dem dargestellten Ausführungsbeispiel in der den Düsenöffnungen 14 gegenüberliegenden Oberfläche des Siliziumchips 2 strukturiert. Die Medienreservoire 28 sind vorzugsweise so ausgelegt, daß sie mit Standard-Pipettierautomaten automatisiert mit Flüssigkeiten befüllt werden können. Dazu können dieselben beispielsweise identische Durchmesser und Abstände besitzen wie die Kammern einer bekannten 348-Well-Mikrotiterplatte. Die Medienleitungen 26 sind vorzugsweise derart ausgestaltet, daß Flüssigkeit aus den Medienreservoiren 28 durch Kapillarkräfte über die Medienleitungen zu den Düsenöffnungen 14 gezogen werden. Somit können über die Medienleitungen 26 die Kanäle 15 der eng beieinanderliegenden Düsenöffnungen 14 mit Flüssigkeit aus größeren Reservoiren 28 versorgt werden. Zwischen den Medienreservoiren 28 und den Düsenöffnungen 14 findet somit eine Formatumwandlung statt.

Die dargestellten Düsenöffnungen 14 können beispielsweise einen Durchmesser von 200 µm aufweisen, wobei die Medienleitungen ebenfalls eine Breite von 200 µm besitzen können. Somit läßt sich das dargestellte Array von vierundzwanzig Düsen bequem mit einem gegenseitigen Abstand von 1 mm anordnen. Der limitierende Faktor für die Anzahl der Düsen, die sich in einem Array anordnen lassen, ist dabei die Breite der Verbindungskanäle, die die Düsen mit den Medienreservoiren verbinden. Diese Verbindungskanäle müssen zwischen den Düsen nach außen geführt werden. Reduziert man die Breite dieser Kanäle weiter, so können auch 48, 96 oder eine noch größere Anzahl von Düsen auf einem Dosierkopf untergebracht werden.

Auf dem Siliziumchip 2 ist bei dem dargestellten Ausführungsbeispiel der vorliegenden Erfindung nun eine Zwischenplatte 4 angeordnet, die eine Ausnehmung 30 aufweist, die über den Düsen angeordnet ist, so daß diese Ausnehmung 30 als eine Druckkammer zur Aufnahme eines Puffermediums dienen kann. Das Puffermedium, das in der Druckkammer 30 angeordnet ist, ist vorzugsweise ein Gas- oder Luft-Gemisch.

Die Zwischenplatte 4 weist bei dem dargestellten Ausführungsbeispiel ferner Ausnehmungen 32 auf, die eine Erhöhung der Kapazität der in dem Siliziumchip 2 gebildeten Medienreservoire 28, um eine größere Menge an Flüssigkeit 34 aufnehmen zu können, bewirken. Als Druckerzeugungsvorrichtung ist bei dem dargestellten Ausführungsbeispiel die Membran 8 über der Druckkammer 30 vorgesehen, wobei über diese Membran 8 ein Überdruck in der Druckkammer 30 erzeugt werden kann. Die Membran 8 kann beispielsweise aus einer elastischen Folie oder aus Silizium bestehen. Zur Vereinfachung der Herstellung kann diese Membran Teil einer Schicht 6 sein, die auf die Oberseite der Zwischenplatte 4 aufgebracht ist, wobei die Schicht 6 im Bereich der Medienreservoire 28, 32 dann vorzugsweise Öffnungen zum Nachfüllen derselben aufweist.

Um eine schlagartige Auslenkung der Verdrängermembran 8 zu erzeugen, kann vorzugsweise eine mechanische Vorrichtung (in Fig. 1 nicht dargestellt) vorgesehen sein, die beispielsweise durch einen Pneumatik-Kolben gebildet sein kann, der modular, ohne feste Verbindung zu dem in Fig. 1 dargestellten Abschnitt der erfindungsgemäßen Vorrichtung über der Verdrängennembran 8 angebracht wird. Der Aktor kann alternativ auch aus einem Piezoaktor oder einem rein mechanischen Aufbau, beispielsweise einer Feder, bestehen.

Ein solches Aktorbauglied ist schematisch in Fig. 5 gezeigt und mit dem Bezugszeichen 40 versehen, wobei das Aktorbauglied 40 eine Bewegung entlang des Pfeils 42 bewirken kann, um somit einen Druck in der Druckkammer 30 zu erzeugen. Wie ferner in Fig. 5 gezeigt ist, ist bei dem dargestellten Ausführungsbeispiel ein Entlüftungsventil 44 in der Verdrängermembran 8 angeordnet, um bei der Relaxation der Verdrängermembran 8 eine Beschleunigung der in den Düsen angeordneten Flüssigkeitsvolumina in Richtung zu der Verdrängermembran 8 hin zu verhindern. Bei dem in Fig. 5 dargestellten Ausführungsbeispiel ist das Entlüftungsventil 44 als aktives Ventil dargestellt, das beim Auslenken der Verdrängermembran 8, um einen Überdruck in der Druckkammer 30 zu erzeugen, durch den Aktor 40 selbst verschlossen wird, während es beim Rückweg des Aktorbauglieds 40 zur Entlüftung freigegeben wird. Hierbei ist die Aktorgeschwindigkeit größer als die durch die Membranrelaxation erzeugte Geschwindigkeit der Verdrängermembran 8.

Im folgenden wird nun die Funktionsweise der beschriebenen erfindungsgemäßen Vorrichtung beschrieben. Zu Beginn werden die Medienreservoire 28, 32 vorzugsweise mit unterschiedlichen auf ein Substrat aufzubringenden Medien gefüllt, wobei dies, wie oben erläutert wurde, beispielsweise aus einer herkömmlichen Mikrotiterplatte mit Hilfe von Standard-Pipettierautomaten erfolgen kann. Durch die beim bevorzugten Ausführungsbeispiel der vorliegenden Erfindung vorgesehenen Abmessungen der Medienleitungen 26 sowie der Düsen erfolgt nun eine automatische Befüllung der Düsen bis zu der unteren Düsenöffnung 14 derselben durch eine Kapillarwirkung. In der Druckkammer 30 ist dann das Puffermedium, beispielsweise ein Luft- oder Gas-Gemisch angeordnet, wobei dasselbe durch die Umgebungsluft oder ein speziell durch die Öffnung 44 eingebrachtes Gemisch gebildet sein kann. In jedem Fall besitzt das Puffermedium bezüglich der zu dosierenden Flüssigkeiten Medien-trennende Eigenschaften, so daß ein Vermischen der zu dosierenden Medien in der Druckkammer 30 nicht stattfindet. Um diese Medientrennungseigenschaft zu unterstützen, kann die Oberseite des Chips mit einer hydrophoben Schicht bedeckt sein. Somit kann die Sicherheit, daß nicht Flüssigkeiten aus verschiedenen Medienleitungen im Bereich der Düsen untereinander vermischt werden, erhöht werden. Überdies kann auch die Unterseite des Chips, in der die Düsenöffnungen gebildet sind, mit einer hydrophoben Schicht bedeckt sein.

Wenn die Düsen nun vorzugsweise durch Kapillarwirkungen bis zu den Öffnungen derselben mit der zu dosierenden Flüssigkeit gefüllt sind, wird durch den Aktor 40 ein Druckpuls bewirkt, um in der Druckkammer 30 eine mechanische Verdrängung durch die Verdrängermembran 8 zu erzeugen. Dadurch wird durch das Puffermedium ein homogener Druckpuls in der Druckkammer 30 ausgebreitet, wie durch die Pfeile 46 in Fig. 1 gezeigt ist. Der erzeugte schnelle Druckpuls wirkt homogen auf alle Düsen und beschleunigt die an den Düsenöffnungen 14 anstehende Flüssigkeitssäule. Die in den Medienleitungen 26 anstehende Flüssigkeit, die zu den Kanälen 15, in denen die Flüssigkeitssäule angeordnet ist, eine fluidische Parallelschaltung darstellt, wird dabei aufgrund des größeren Strömungswiderstands deutlich schwächer beschleunigt als das Volumen der an den Düsenöffnungen anstehenden Flüssigkeitssäulen. Somit wird die Flüssigkeit zeitgleich durch alle Düsenöffnungen 14 ausgestoßen. Dieser Ausstoß wird dadurch bewirkt, daß das durch die Verdrängerbewegung komprimierte Puffermedium durch die Ausdehnungstendenz desselben einen Überdruck in der Druckkammer 30 erzeugt. Sind nun die Düsen leer, bzw. ist der Überdruck des Puffermediums so weit abgebaut, daß sich an den Düsen keine Flüssigkeit mehr ablöst, befüllen sich die Düsen aufgrund der wirkenden Kapillarkräfte in den Medienleitungen 26 wieder.

Im Anschluß wird die Verdrängermembran 8 in ihre Ursprungsstellung zurückbewegt, indem das Aktorbauglied 40 entsprechend betrieben wird. Um einen Unterdruck, der durch die Relaxation der Verdrängermembran erzeugt werden würde, in der Druckkammer 30 zu verhindern, ist das Entlüftungsventil 44 vorgesehen. Dieses Entlüftungsventil erlaubt zum Zeitpunkt der Membranrelaxation eine Entlüftung der Druckkammer, so daß keine Beschleunigung der in den Düsen angeordneten Flüssigkeit in einer Richtung zu der Verdrängermembran 8 hin bewirkt wird. Befindet sich nun die Verdrängermembran 8 wieder in ihrer Ausgangsstellung, kann der nächste Dosiervorgang durchgeführt werden.

Alternativ zu dem oben beschriebenen aktiven Entlüftungsventil 44 kann auch ein passives Ventil vorgesehen sein, bei dem es sich beispielsweise um ein sehr kleines Entlüftungsloch handeln kann, das sich an einer beliebigen Stelle der Druckkammer 30 befinden kann. Bevorzugt kann dieses sowohl in der Verdrängermembran als auch auf der Düsenseite in Silizium angeordnet sein. Bei schnellen Membranbewegungen, wie sie beispielsweise zum Ausstoßen der Mehrzahl von Mikrotröpfchen durchgeführt werden, erlaubt dieses Entlüftungsloch keinen Druckausgleich. Jedoch läßt dasselbe beim relativ langsamen Relaxieren der Membran einen Druckausgleich zu und verhindert somit einen Unterdruck in der Druckkammer, so daß eine nachteilige Druckdifferenz an den Düsen verhindert werden kann.

In der obigen Beschreibung wurde der Ausdruck Düse 14 jeweils verwendet, um eine nach außen gerichtete Düsenöffnung sowie eine über derselben angeordnete Einrichtung zum Festlegen einer Flüssigkeitssäule an der Düsenöffnung zu definieren. Zum Ausstoßen eines Mikrotröpfchens wird dann durch das Puffermedium jeweils ein Druck auf das von der Düsenöffnung beabstandete Ende der Flüssigkeitssäule ausgeübt. Um das Flüssigkeitsvolumen in der Düse, d.h. das Flüssigkeitsvolumen der Flüssigkeitssäule, zu vergrößern, kann über der Düsenöffnung zusätzlich zu den vorgesehenen Kanälen in axialer Richtung eine offene Steigleitung angeordnet sein. Diese Steigleitungen können über eine T-förmige Verbindung nahe der Düse an die Medienleitungen angebunden sein, die unverändert die Düsen mit jeweiligen Medienreservoiren verbinden. Die Steigleitungen befüllen sich mit Flüssigkeit aus den Medienleitungen allein aufgrund von Kapillarkräften. In diesem Fall wird durch das Puffermedium ein Druck auf das von den Düsen beabstandete Ende der Steigleitung ausgeübt.

Falls die Steigleitungen oder auch der Düsenbereich direkt durch herkömmliche Verfahren, beispielsweise durch Pipettierautomaten oder durch Mikrodispenser und dergleichen, mit Flüssigkeit aufgefüllt werden können, kann auf die angeschlossenen Reservoire sowie die Medienleitungen verzichtet werden. Andernfalls stellen die außenliegenden Reservoire, wie sie in der Draufsicht von Fig. 4 zu erkennen sind, eine bevorzugte Ausgestaltung dar, da sie bequem mit Standard-Pipettierautomaten befüllt werden können und ferner durch dieselben bewirkt werden kann, daß sich eventuell vorgesehene Steigleitungen automatisch über Kapillarkräfte befüllen.

Vorzugsweise kann durch die erfindungsgemäße Vorrichtung zum Aufbringen einer Mehrzahl von Mikrotröpfchen auf ein Substrat durch jede Düse ein unterschiedliches Flüssigkeitsmedium auf das Substrat aufgebracht werden. Es ist jedoch auch denkbar, daß mehrere Düsen eine Düsengruppe bilden, die dann über eine gemeinsame Medienleitung mit derselben Flüssigkeit versorgt wird.

Die in Fig. 4 gezeigten Medienleitungen 26 sind nebeneinander in der Oberfläche des Siliziumchips 2 gebildet. Wie oben erwähnt wurde, begrenzt diese Anordnung der Medienleitungen die Packungsdichte der Düsen. Um die Packungsdichte der Düsen erhöhen zu können, ist es möglich, mehrere Abdeckplatten bzw. Zwischenplatten übereinander zu montieren und die Medienleitungen dann auf mehrere Ebenen zu verteilen. Indem Leitungen auf verschiedenen Ebenen geführt werden, können sich diese auch scheinbar kreuzen, ohne daß eine Vermischung der verschiedenen Flüssigkeiten in den jeweiligen Leitungen stattfindet. Hierbei ist anzumerken, daß im Bereich der Düsen die Medienleitungen sowohl offen geführt sein können als auch mit einer Abdeckung versehen sein können. Offene Medienleitungen haben den Vorteil, daß sie sich schneller befüllen und weniger verschmutzungsanfällig sind. Abgedeckte Medienleitungen sind vorteilhaft dahingehend, daß eine Querkontamination zwischen verschiedenen Medienleitungen sicher ausgeschlossen werden kann.

Wie bereits oben erwähnt wurde, kann jegliche Druckerzeugungsvorrichtung verwendet werden, die in der Lage ist, das Puffermedium mit einem Druckpuls zu beaufschlagen. Vorzugsweise wird hierzu eine Verdrängermembran, die durch einen geeigneten Aktor, beispielsweise einen Pneumatik-Kolben, einen Piezoaktor oder eine Feder, getrieben wird, verwendet. Der erforderliche Verdrängungsweg ist dabei zum einen aufgrund der Kompressibilität des Gases von der Größe des Volumens, in dem das Puffermedium angeordnet ist, und zum anderen von der Größe der Düsen abhängig, und sollte über einen veränderbaren Stellweg des Aktors einstellbar sein. Führt man die Verdrängermembran leitfähig aus, so kann über die Detektion eines elektrischen Kontakts eine definierte Referenzposition des Aktors hinsichtlich der Membran angefahren werden.

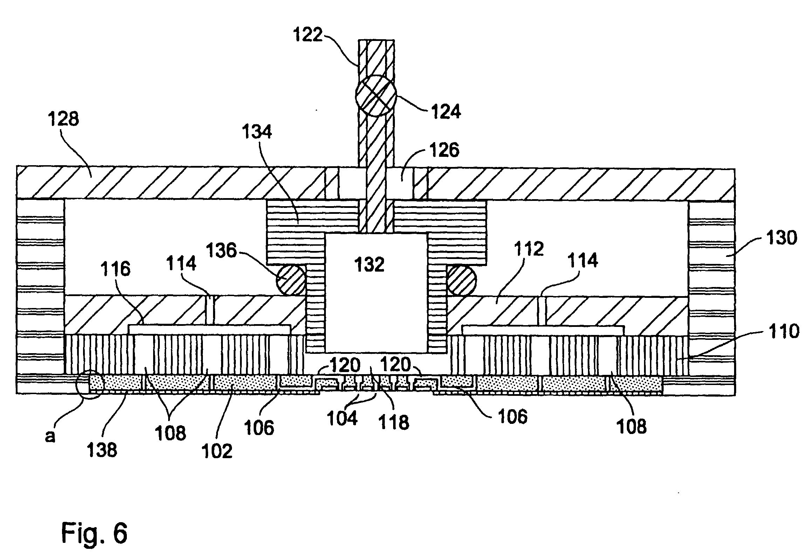

Ein alternatives Ausführungsbeispiel einer erfindungsgemäßen Vorrichtung mit einer abweichenden Druckerzeugungseinrichtung wird nachfolgend bezugnehmend auf Fig. 6 erläutert. In Fig. 6 ist wiederum ein Dosierkopfsubstrat 102 gezeigt, wobei in einer unteren Oberfläche desselben Düsenöffnungen 104 gebildet sind, die über Fluidleitungen 106 mit Flüssigkeitsreservoiren 108, die in einer Zwischenschicht 110 gebildet sind, verbunden sind. Über der Zwischenschicht 110 ist bei dem dargestellten Ausführungsbeispiel eine Deckplatte 112 angeordnet, in der Entlüftungsöffnungen 114 für die Fluidreservoire 108 gebildet sind.

Wie in Fig. 6 zu sehen ist, weist die Deckplatte 112 jeweilige Ausnehmungen 116 auf, derart, daß jeweils für eine Mehrzahl von Fluidreservoiren eine Entlüftungsöffnung 114 vorgesehen ist. Durch das Vorsehen der Entlüftungsöffnungen wird bewirkt, daß sich beim kapillaren Nachfließen der Dosiermedien kein Unterdruck in den Flüssigkeitsreservoirs 108 aufbaut. Um ferner die Verdunstung aus den Flüssigkeitsreservoirs 108 zu verringern, besitzen die Entlüftungslöcher 114 vorzugsweise einen kleineren Flächenquerschnitt als die Reservoiröffnungen. Dies kann vorzugsweise dadurch erreicht werden, daß, wie in Fig. 6 dargestellt ist, für eine Mehrzahl von Flüssigkeitsreservoiren 108 eine einzige Entlüftungsöffnung 114 vorgesehen ist. Um eine Mediumverdunstung weiter zu verringern, kann die Deckplatte 112 ferner als eine Kühleinrichtung aufgebaut sein, indem dieselbe vorzugsweise aus einem gut wärmeleitfähigen Material besteht, das entweder mit speziellen Kühlelementen, beispielsweise Peltier-Elementen, mechanisch in Verbindung ist oder durch strukturierte Kanalführungen mit einer vorgekühlten Flüssigkeit versorgt wird. Alternativ können die Entlüftungsöffnungen 114 ferner in einer gewundenen bzw. mäanderförmigen Ausgestaltung vorgesehen sein, um eine Verdunstung weiter zu reduzieren. Neben den oben beschriebenen Wirkungen einer Verdunstungsreduzierung führt die Deckplatte 112 ferner zu einer mechanischen Stabilisierung des Dosierkopfes, da durch dieselbe durch den Aktor eingeleitete mechanische Kräfte aufgenommen werden.

Wie in Fig. 6 gezeigt ist, ist in der Zwischenschicht 110 oberhalb der Düsenöffnungen 104 eine Ausnehmung gebildet, die eine Druckkammer 118 definiert. In der Druckkammer 118 ist wiederum das Puffermedium bei dem dargestellten Ausführungsbeispiel Luft, angeordnet. An dieser Stelle sei angemerkt, daß die Fluidleitungen 106, die in Bereichen 120 derselben zu der Druckkammer 118 hin offen sind, vorzugsweise derart ausgestaltet sind, daß eine zu dosierende Flüssigkeit durch Kapillarkräfte in denselben gehalten wird, während Luft dadurch aus den Fluidleitungen gedrängt wird.

Bei dem in Fig. 6 dargestellten Ausführungsbeispiel weist die Druckerzeugungseinrichtung zum Beaufschlagen des Puffermediums mit einem Druck eine Druckluftzuleitung 122, die mit einem Ventil 124 versehen ist, auf. Die Druckluftzuleitung 122 ist bei dem dargestellten Ausführungsbeispiel mittels einer Befestigungseinrichtung 126, beispielsweise einer Verschraubung, an einer Gehäuseplatte 128, die Teil einer Halterung 130 sein kann, befestigt. Die Druckluftzuleitung 122 weist einen Bereich 132 mit einem erhöhten Querschnitt auf, der in der Druckkammer 118 endet. Der Bereich mit vergrößertem Querschnitt ist durch einen Einsatz 134 definiert. Der Einsatz 134 ist mittels einer Dichtung 136, beispielsweise eines O-Rings an der Deckplatte 112 angebracht, vorzugsweise indem die Gehäuseplatte 128 als Druckplatte verwendet wird. Durch den Bereich 132 eines erweiterten Querschnitts kann ein definierter Druck auf die am gegenüberliegenden Ende der Druckkammer angeordneten Düsenöffnungen 104 ausgeübt werden.

In anderen Worten besteht die Druckerzeugungseinrichtung aus einer Zuflußleitung 122, die mit den von den Düsenöffnungen 104 beabstandeten Enden der Flüssigkeitssäulen über ein zwischengeschaltetes Ventil 124 in Verbindung steht. Steht die Zuflußleitung 122 bis zum zunächst geschlossenen Ventil 124 unter einem Ausgangsdruck, so führt das Öffnen des Ventils zu einem Zufluß des Puffermediums, bei dem bevorzugten Ausführungsbeispiel von Luft und erhöht den Druck an den obengenannten Enden der Flüssigkeitssäulen. Der Druckanstieg endet mit dem Schließen des Ventils 124. Dabei wird je nach Schaltzeit des Ventils 124 entweder nur ein Teilvolumen der Flüssigkeitssäule oder maximal das gesamte Füllvolumen der Säulen durch die Düsenöffnungen 104 auf ein Zielsubstrat (nicht gezeigt) ausgegeben. Nach dem Schließen des Ventils kann der Druckabbau durch Öffnen eines zusätzlichen Entlüftungskanals (in Fig. 6 nicht gezeigt) zeitlich beschleunigt werden.

Zusätzlich ist in Fig. 6 eine untere Deckschicht 138 gezeigt, die in der Regel sehr dünn ist, um das Substrat, auf das die Mikrotröpfchen aufgebracht werden sollten, bei der Dosierung möglichst nahe an die Ebene der Düsenöffnungen 104 heranbringen zu können. Die untere Deckschicht, die im Bereich der Düsenöffnungen 104 eine Ausnehmung enthält, kann zum Halten der Flüssigkeiten in den Fluidleitungen dienen und schützt gleichzeitig die Düsenöffnungen vor Verschmutzung und Zerstörung.

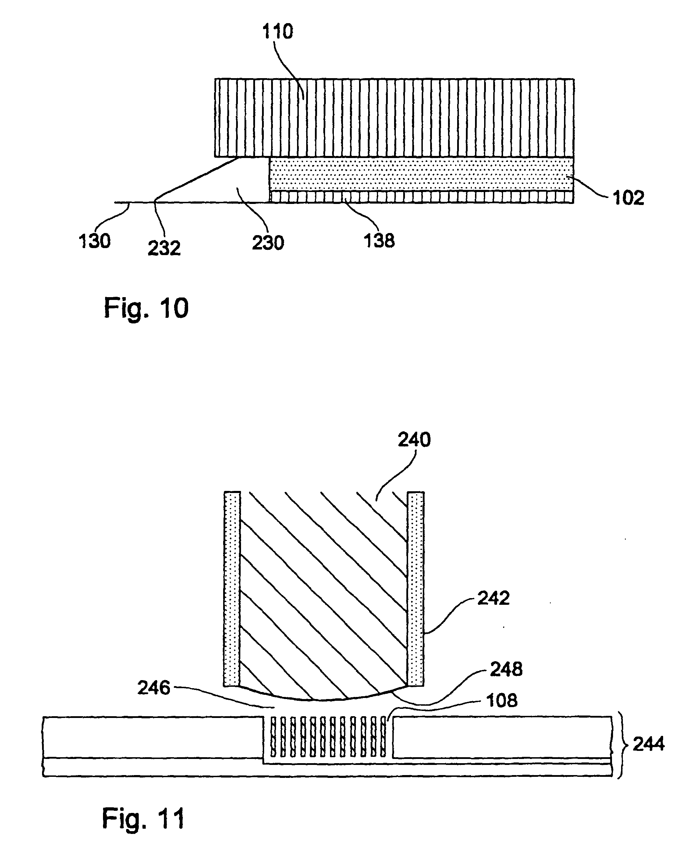

Die Anbringung der Halterung 130 wird später hierin bezugnehmend auf Fig. 10 näher erläutert.

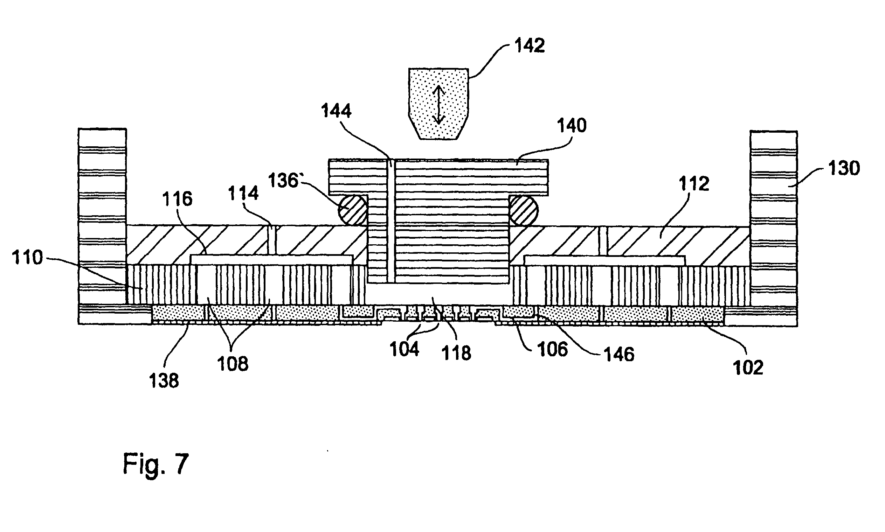

Fig. 7 zeigt ein weiteres Ausführungsbeispiel einer erfindungsgemäßen Vorrichtung, bei der eine alternative Druckerzeugungseinrichtung verwendet ist. In Fig. 7 sind solche Elemente, die identisch zu denen in Fig. 6 sind, mit gleichen Bezugszeichen bezeichnet und werden nachfolgend nicht nochmals getrennt beschrieben.

Bei dem in Fig. 7 dargestellten Ausführungsbeispiel besteht die Druckerzeugungseinrichtung aus einem Stößel 140 und einem demselben wirkungsmäßig zugeordneten Aktor 142. Der Stößel 140 ist über einen elastischen Dichtungsring 136' an der Deckplatte 112 angebracht. Der elastische Dichtungsring 136' dient zur Ausbildung eines nach außen abgeschlossenen Druckkammervolumens und sorgt bei Betätigung des Stößels 140 durch den Aktor 142 für ein nach oben geschlossenes Druckkammervolumen der Druckkammer 118. Der Stößel 140 kann mit dem Aktor 142 mechanisch fest verbunden sein oder, wie schematisch in Fig. 7 gezeigt ist, keine feste Verbindung aufweisen. In Fig. 7 ist ferner eine Entlüftungsöffnung 144 in dem Stößel 140 dargestellt, die neben dem gezeigten geradlinigen Verlauf einen beliebigen, für eine Entlüftung der Druckkammer 118 geeigneten Verlauf aufweisen kann.

Der Stößel 140 kann mittels des Aktors 142 mit hoher Dynamik in Richtung der Düsen 104 gedrückt werden, wodurch sich das Volumen der Druckkammer 118 verringert, so daß das eingeschlossene Puffermedium, bei dem bevorzugten Ausführungsbeispiel Luft, in der Druckkammer komprimiert wird und der Druck steigt. Dadurch werden Mikrotröpfchen aus den Düsenöffnungen 104 ausgestoßen. Nach dem Ausstoß der Mikrotröpfchen wird der ausgelenkte Stößel 140 allein durch die Rückstellkraft der elastischen Dichtungseinrichtung 136' in seine Ausgangslage zurückgebracht.

Die Druckerzeugungseinrichtung mit Stößel 140, wie sie in Fig. 7 gezeigt ist, hat den Vorteil, daß das Volumen der Druckkammer 118 trotz der durch die Zwischenplatte 110 vergrößerte Kapazität der Flüssigkeitsreservoire 108 sehr klein ausgebildet sein kann. Befindet sich in der Druckkammer 118 ein gasförmiges Puffermedium, so kann beim Druckaufbau durch das kleinere Kammervolumen der kompressible Volumenanteil verringert werden. Bei gleichem zeitlichen Auslenkungsverhalten des Aktors 142 kann daher im Vergleich ein erhöhter Kammerdruck erzeugt werden und somit die Tropfengeschwindigkeit gesteigert werden.

Wie in den Fig. 6 und 7 gezeigt ist, können Durchgangslöcher im Dosierkopfsubstrat 102 vorgesehen sein, so daß die Fluidleitungen 106 wechselnd an der Oberseite oder an der Unterseite des Dosierkopfsubstrats geführt werden. Ein Durchgangsloch kann dabei auch direkt unterhalb des Fluidreservoirs angeordnet sein, wie es mit dem Bezugszeichen 146 in Fig. 7 bezeichnet ist. Somit kann hier das zu dosierende Medium auf die Substratunterseite geführt werden.

Obwohl oben Ausführungsbeispiele der vorliegenden Erfindung beschrieben wurden, bei denen die Düsenöffnungen, die Fluidleitungen, die Fluidreservoire und die Einrichtungen zum Festlegen einer Flüssigkeitssäule jeweils auf eine bestimmte Weise in einem Dosierkopfsubstrat, vorzugsweise einem Siliziumsubstrat, einer Zwischenplatte oder einer Deckplatte angeordnet sind, ist es für Fachleute offensichtlich, daß die unterschiedlichen Funktionselemente auf jegliche realisierbare Art und Weise in den unterschiedlichen Schichten angeordnet sein können.

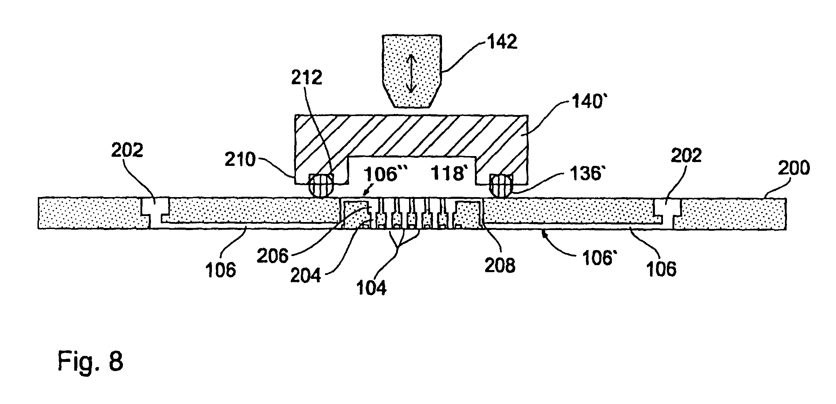

Beispielsweise ist in Fig. 8 ein Ausführungsbeispiel einer erfindungsgemäßen Vorrichtung gezeigt, bei dem die gesamte Medienlogistik, d.h. die Düsenöffnungen, die Fluidleitungen und die Fluidreservoire in einem einzigen Substrat 200 angeordnet sind, so daß auf jegliche Deckplatte, sowohl obere als auch untere, verzichtet werden kann. In diesem Fall müssen die Fluidkanäle 106 eine so hohe Kapillarkraft aufweisen, daß die zu dosierenden Flüssigkeiten allein durch diese Kapillarkraft in den Kanälen gehalten werden. Diese Fluidleitungen 106 sind einerseits mit in dem Substrat 200 befindlichen Flüssigkeitsreservoiren 202 und andererseits mit in demselben angeordneten Düsenöffnungen 104 verbunden. In Fig. 8 ist, wie auch in den Fig. 6 und 7, oberhalb der Düsenöffnungen 104 jeweils ein Düsenkanal 204 und eine über demselben angeordnete Standleitung 206 angeordnet, wobei der Düsenkanal 204 und die Standleitung 206 zusammen die Flüssigkeitssäule eines zu dosierenden Mediums an jeder Düsenöffnung festlegen. Alternativ kann es wiederum ausreichend sein, lediglich den Düsenkanal 204 als Einrichtung zum Festlegen einer Flüssigkeitssäule vorzusehen.

Die Fluidleitungen 106, und insbesondere die Bereiche 106' und 106'' derselben, die in der Unterseite bzw. Oberseite des Substrats 200 gebildet sind, weisen solche Tiefen- und Breiten-Abmessungen auf, daß eine in denselben befindliche Flüssigkeit allein durch eine Kapillarwirkung in denselben gehalten wird. Eine ausreichende Kapillarwirkung der Fluidleitungen 106 kann realisiert werden, indem dieselben mit einer sehr geringen Breite und verhältnismäßig dazu großen Tiefe ausgestaltet werden.

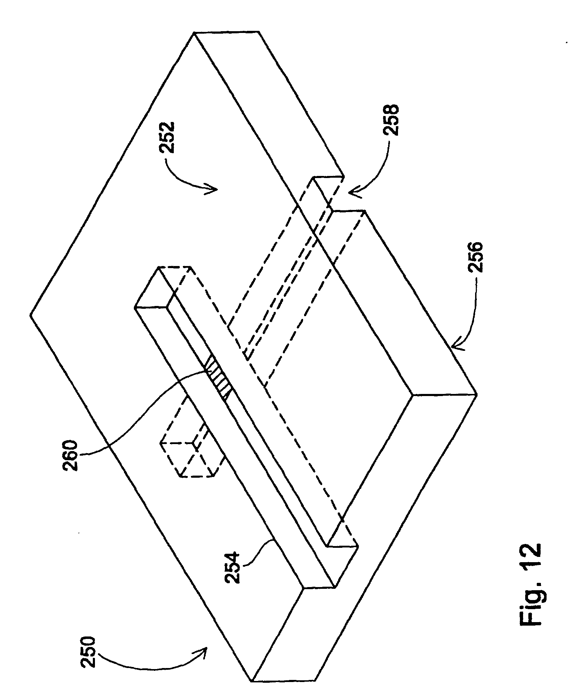

Bei einem solchen Substrat, wie es in Fig. 8 gezeigt ist, muß, da die Fluidleitungen 106 zur Oberseite bzw. Unterseite hin offen sind, sichergestellt sein, daß der Strömungswiderstand in der Durchgangsöffnung 208 ausreichend größer ist als der Strömungswiderstand der Düsenöffnungen 104, so daß bei der Druckerzeugungseinrichtung sichergestellt ist, daß Mikrotröpfchen lediglich durch die Düsenöffnungen, nicht jedoch durch die Durchgangsöffnung 208 und über die Fluidleitungen 106 ausgestoßen wird. Somit muß in der Durchgangsöffnung 208 ein sehr kleiner Strömungswiderstand mit einer sehr hohen Fertigungspräzision ausgebildet werden. Ein Ausführungsbeispiel, wie eine Durchgangsöffnung 208 mit einer sehr hohen Präzision gefertigt werden kann, wird später hierin bezugnehmend auf Fig. 12 näher beschrieben.

Die in Fig. 8 gezeigte Druckerzeugungseinrichtung weist ebenfalls einen Stößel 140' und einem demselben zugeordneten Aktor 142 auf, wobei der Stößel 140' über einen elastischen Dichtungsring 136' mit dem Substrat 200 in Wirkverbindung ist. Bei dem in Fig. 8 dargestellten Ausführungsbeispiel ist die Druckkammer 118' zum größten Teil durch eine Ausnehmung in dem Stößel 140' gebildet. In dem die Ausnehmung, die die Druckkammer 118' bildet, umgebenden Randbereich 210 weist der Stößel 140' eine umlaufende Rille 212 auf, in der der elastische Dichtungsring 136' angeordnet oder vorzugsweise befestigt ist. Über den Aktor 142 ist nun eine Kraft auf den Stößel 140' ausübbar, so daß durch eine Kompression des elastischen Dichtungsrings 136' ein Überdruck in der Druckkammer 118' erzeugt werden kann, der einen Ausstoß von Mikrotröpfchen durch die Düsenöffnungen 104 bewirkt. An dieser Stelle sei angemerkt, daß die Druckkammer 118' nicht vollständig durch eine Ausnehmung in dem Stößel 140' gebildet sein muß, sondern ferner optional oder gleichzeitig das Substrat 200 strukturiert sein kann, um so zur Erzeugung der Druckkammer beizutragen.

Bei dem Ausführungsbeispiel, das in Fig. 8 gezeigt ist, können die Druckerzeugungseinrichtung und das Substrat 200 als vollständig voneinander trennbare getrennte Elemente aufgebaut sein, da der Dichtungsring 136' nicht mit dem Substrat verbunden sein muß. Somit ist es möglich, eine Mehrzahl von Trägersubstraten in einer Fertigungsreihe nacheinander zuzuführen und somit Mikrotröpfchen auf eine Mehrzahl von Trägersubstraten aufzubringen. Selbiges gilt in gleicher Weise für das in Fig. 7 dargestellte Ausführungsbeispiel, da auch dort keine feste Verbindung zwischen der Druckerzeugungseinrichtung und dem Dosierkopf vorliegen muß.

Das in Fig. 8 gezeigte Dosierkopfsubstrat 200 kann entweder durch herkömmliche Mikrostrukturierungsverfahren in Silizium gebildet sein, wobei sich die Anordnung jedoch auch insbesondere für eine Ausführung in Kunststoff, z.B. durch eine Herstellung mittels einer Prägetechnik, eignet. Da die Fluidleitungen hochkapillar und nach einer Seite offen sind, wird ferner jeder momentan vorhandene Lufteinschluß aus dem Kanal hinausgedrängt. Die offenen Kanäle bieten ferner einen direkten Zugang für die Reingigung des Substrats.

Wie bereits angesprochen wurde, kann die Druckkammer entweder zumindest teilweise in das Substrat hineinstrukturiert sein und/oder vollständig oder teilweise in den Kopf des zugeordneten Aktors abgeformt sein, wie für den Stößel 140' bezugnehmend auf Fig. 8 beschrieben wurde. Bei dieser Ausführungsform ohne Deckplatten ist es notwendig, daß die Substratdurchführungen der Fluidleitungen bzw. Kanäle einen deutlich größeren Strömungswiderstand als die Düsenkanäle aufweisen, damit beim Auslösen des Druckpulses nur von den Düsenöffnungen Mikrotröpfchen abgegeben werden. Dies kann man einfach dadurch erreichen, indem die Öffnungsweite der Substratdurchführung einen deutlich kleineren Querschnitt aufweist als die Düsenöffnung. Somit ist es bei dem Ausführungsbeispiel gemäß Fig. 8 möglich, auf Deckplatten vollständig zu verzichten, wobei ein entscheidender Vorteil dieses Verzichts darin liegt, daß die eventuell bei der Medienbefüllung auftretenden Lufteinschlüsse an jeder Stelle des Substrats durch die Kapillarkräfte herausgedrückt und entweichen können. Somit ist die Befüllung wesentlich vereinfacht.

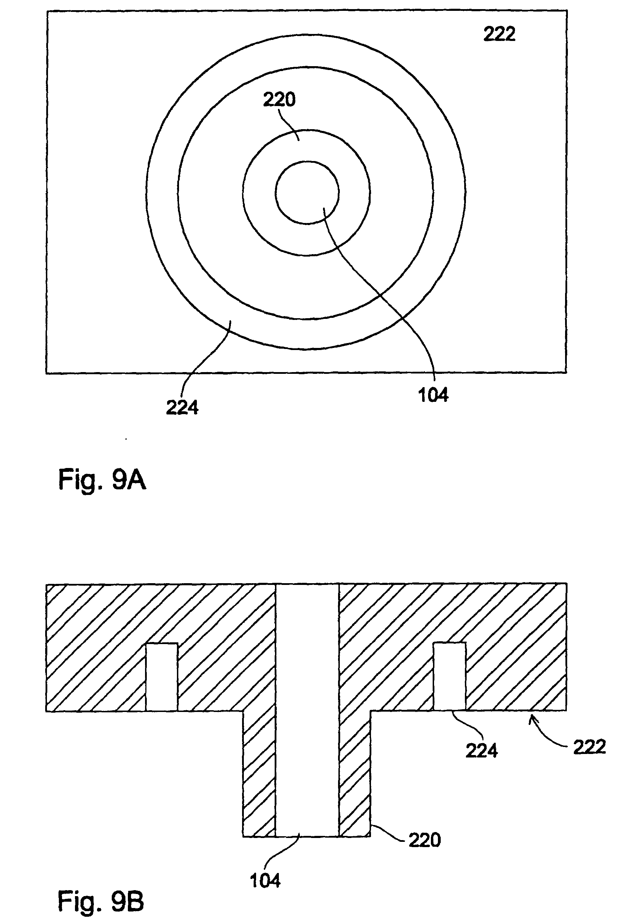

Bezugnehmend auf die Fig. 9A und 9B wird nun kurz auf ein Ausführungsbeispiel, wie die Düsen in der Unterseite des Dosierkopfsubstrats ausgestaltet sein können, eingegangen. Fig. 9A zeigt eine Unteransicht einer möglichen Düsenstruktur, während Fig. 9B schematisch eine Querschnittansicht derselben zeigt. Eine Düsenöffnung 104 ist jeweils von einem Rand 220 umgeben, der bei dem dargestellten Ausführungsbeispiel von der Unterseite des Dosierkopfsubstrats 222 vorsteht. Wie den Fig. 9A und 9B ferner zu entnehmen ist, ist in der Unterseite 222 des Dosierkopfsubstrats eine Grabenstruktur 224 gebildet, die eine Düsenöffnung 104, bzw. den Rand 220 derselben, vollständig umgibt. Die Grabenstruktur 224 ist in einem bestimmten Abstand von der Düsenöffnung 104 angeordnet, derart, daß der Graben 224 aufgrund seiner Tiefenstruktur in der Lage ist, an der Düsenöffnung 104 überschüssig auftretendes Medium kapillar zu binden. Diese, die Düsen umgebenden, Gräben können auch derart miteinander vernetzt sein, daß überschüssige Flüssigkeit von dem Düsenbereich durch Kapillarkräfte entfernt und in die äußeren Bereiche des Dosierkopfs transportiert wird.

Bezugnehmend auf die Fig. 10 wird nun der vergößerte Abschnitt a in Fig. 6 näher erläutert, wobei Fig. 10 eine Ausnehmung 230 im unteren Bereich des Dosierkopfes zu entnehmen ist, über die die Halterung 130 an dem Dosierkopf befestigbar ist. Wie in Fig. 10 zu sehen ist, ist bei diesem Ausführungsbeispiel diese Ausnehmung, die umlaufend oder abschnittsweise in dem Dosierkopf gebildet ist, dadurch realisiert, daß die Zwischenschicht 110 über das Dosierkopfsubstrat 102 und die untere Deckschicht 138 vorsteht. Somit ist an der Unterseite 232 der Zwischenschicht 110 eine Auflagefläche gebildet, die auf der Halterung 130 derart aufliegt, daß die Ebene der Düsenöffnungen, in Fig. 10 nicht gezeigt, möglichst nahe an ein darunter befindliches Trägersubstrat, auf das Mikrotröpfchen aufgebracht werden sollen, herangebracht werden kann. Das Trägersubstrat kann dadurch mit einem sehr kleinen Abstand zu den Düsenöffnungen, ohne jedoch dieselben zu berühren, unter dem Dosierkopf frei bewegt werden. Die Halterung 130 kann ferner ausgestaltet sein, um eine Mehrzahl von Dosierköpfen zu halten, so daß jeweils der Dosierkopf, mit dem gerade dosiert werden soll, unter einen Aktor geführt werden kann, indem lediglich die Halterung gehandhabt wird. Ferner kann die Halterung derart ausgebildet sein, daß sie gleichzeitig als Einsatzvorrichtung für eine Anlage zum Mediumübertrag von einer Bevorratungseinrichtung, beispielsweise einer Titerplatte, zu den Flüssigkeitsreservoiren der in die Halterung eingelegten Dosierköpfe dienen kann. Das Befüllen des Dosierkopfes sowie das Einbringen des befüllten Dosierkopfes in die Druckerzeugungseinrichtung reduziert sich daher auf die alleinige Handhabung der Halterung.

Biologische Flüssigkeiten werden in der Regel durch Pipettiersysteme von einem Ausgangsformat, beispielsweise dem einer Titerplatte, zum Zielort übertragen. Das zu dosierende Medium, bzw. die zu dosierende Flüssigkeit 240, ist dabei in einer Kapillare 242 gespeichert. Es ist daher vorteilhaft, die Flüssigkeitsreservoire 108 eines Dosierkopfes, wobei in Fig. 11 ein Abschnitt eines solchen exemplarisch mit dem Bezugszeichen 244 bezeichnet ist, mit kapillaren Zwischenstegen 246 zu versehen. Damit Flüssigkeit in der Kapillare 242 gespeichert wird, muß die Kapillare hydrophil sein. Wenn dieselbe hydrophil ist, wölbt sich der Fluid-Meniskus 248 am Ende der Kapillare 242 nach außen, so daß die kapillaren Zwischenstege beim Aufsetzen der Pipettierkapillare 242 die Oberfläche des gespeicherten Dosiermediums 240 zerstören. Ein Vorstehen der kapillaren Zwischenstege über die Oberfläche des Substrats des Doserkopfs 244 ist daher nicht erforderlich. Somit wird die Oberflächenspannung überwunden und das Medium 240 wird in die kapillar wirkende Reservoirstruktur 246 hineingezogen. Wird insbesondere mit einem mehrkanaligem System gearbeitet, beispielsweise mit einem Nadelarray von 96 Pipettierkapillaren, so können auf die beschriebene Weise alle Reservoire des Druckkopfes gleichzeitig kapillar befüllt werden.

Abschließend wird nun bezugnehmend auf Fig. 12 ein bevorzugtes Verfahren, das zur Herstellung einer Substratdurchführung, wie sie die oben beschriebenen Dosierköpfe der erfindungsgemäßen Vorrichtung aufweisen, verwendet werden kann, beschrieben. In Fig. 12 ist schematisch ein Abschnitt eines Substrats 250 gezeigt, in dessen oberer Oberfläche 252 ein erster Graben 254 erzeugt wird, und in dessen unterer Oberfläche 256 ein zweiter Graben 258 erzeugt wird. Die Gräben 254 und 258 schneiden sich unter einem definierten Winkel. Die Tiefe der Gräben 254 und 258 ist derart gewählt, daß im Überschneidungsbereich eine Substratdurchführung 260 entsteht, deren Öffnungsweite im wesentlichen durch die Breite der engen Kanäle 254 und 258 sowie den Schnittwinkel der Kanäle 254 und 258 definiert ist. Somit können durch das beschriebene Verfahren vorteilhaft Substratdurchführungen mit einer geringen, definierten Öffnungsweite hergestellt werden. Der Vorteil eines solchen Verfahrens besteht darin, daß man nur in einer Dimension eine kleine Struktur herstellen muß, nämlich einen engen tiefen Kanal. Durch das Erzeugen zweier derartiger Kanäle, deren Tiefen addiert größer sein müssen als die Substratdicke, ergibt sich eine Substratdurchführung 260 mit einer in zwei Dimensionen kleinen, definierten Öffnungsweite. Dieses Verfahren zur Herstellung einer kleinen Substratdurchführung besitzt den zusätzlichen Vorteil, daß sie tolerant gegenüber Justagefehlern der Strukturen auf Substratvorderseite und Substratrückseite ist. Eine geringe Fehljustage der beiden Strukturen bewirkt lediglich eine lokale Verschiebung der Substratdurchführung, nicht jedoch eine Änderung der Öffnungsweite.

Das oben beschriebene Verfahren eignet sich insbesondere zur Erzeugung von Substratdurchführungen in Siliziumsubstraten mittels herkömmlicher photolithografischer Strukturierungstechniken. Alternativ können jedoch auch Substratdurchführungen in Substraten aus anderen Materialien, beispielsweise Kunststoffen, Keramiken und dergleichen, mittels beliebiger geeigneter Verfahren zum Erzeugen von Gräben implementiert werden.

Obwohl bei dem oben beschriebenen bevorzugten Ausführungsbeispiel der vorliegenden Erfindung der Abschnitt des Dosierkopfs, in dem die Düsenöffnungen gebildet sind, mikromechanisch in einem Siliziumsubstrat gebildet ist, ist es für Fachleute klar, daß der Dosierkopf, d.h. sowohl das Dosierkopfsubstrat als auch die verschiedenen Zwischenschichten und Deckschichten aus anderen geeigneten Materialen unter Verwendung geeigneter Herstellungstechniken gebildet sein können. Beispielsweise kann das Substrat unter Verwendung einer Spritzgußtechnik oder einer Prägetechnik aus einem Kunststoff oder einer Keramik gebildet sein. Wiederum alternativ kann das Substrat aus einem Metall, einem Glas oder einer Glas-Siliziumstruktur bestehen. Die Deck- und Zwischenschichten können vorteilhafterweise aus einem durchsichtigen Glas, beispielsweise einem Pyrexglas, bestehen.

## Patentansprüche

1. Vorrichtung zum Aufbringen einer Mehrzahl von Mikrotröpfchen auf ein Substrat, mit folgenden Merkmalen:
einer Mehrzahl von Düsenöffnungen (14; 104) in einem Dosierkopf;
einer Einrichtung zum Festlegen einer Flüssigkeitssäule eines zu dosierenden Mediums (34) an jeder Düsenöffnung (14; 104);
einer mit einem Puffermedium befüllbaren Druckkammer (30; 118; 118'), die derart angeordnet ist, daß durch das Puffermedium gleichzeitig ein Druck auf die von den Düsenöffnungen (14; 104) beabstandeten Enden der Flüssigkeitssäulen ausübbar ist;
einer Druckerzeugungseinrichtung (8; 122, 124, 132, 134; 140, 142; 140') zum Beaufschlagen des Puffermediums mit einem Druck, derart, daß durch die Mehrzahl von Düsenöffnungen (14; 104) gleichzeitig eine Mehrzahl von Mikrotröpfchen auf das Substrat aufgebracht wird; und
Flüssigkeitsreservoiren (28, 32; 108; 202) für die zu dosierenden Medien (34), die mit den Einrichtungen zum Festlegen einer Flüssigkeitssäule an einer Düsenöffnung (14; 104) fluidmäßig verbunden sind.

2. Vorrichtung nach Anspruch 1, bei der die Druckerzeugungseinrichtung durch eine Verdrängermembran (8) und einen zugeordneten Aktor (40) gebildet ist.

3. Vorrichtung nach Anspruch 1, bei der das Puffermedium Luft ist und die Druckerzeugungseinrichtung eine mit einem Ventil (124) versehene Druckluftzuführungsvorrichtung (122) aufweist, die mit der Druckkammer (118) in fluidmäßiger Verbindung ist.

4. Vorrichtung nach Anspruch 1, bei der die Druckerzeugungseinrichtung einen Stößel (140; 140') und einen Aktor (142) aufweist, wobei das Puffermedium durch das Betätigen des Stößels (140; 140') mittels des Aktors (142) mit einem Druck beaufschlagbar ist.

5. Vorrichtung nach einem der Ansprüche 1 bis 4, bei der die Einrichtung zum Festlegen einer Flüssigkeitssäule an jeder Düsenöffnung (14; 104) einen zu einer jeweiligen Düsenöffnung (14; 104) führenden, durch eine Kapillarwirkung befüllbaren Kanal (15; 204) umfaßt.

6. Vorrichtung nach einem der Ansprüche 1 bis 5, bei der die Flüssigkeitsreservoire (28, 32; 108; 202) über Fluidleitungen (26; 106) mit den Einrichtungen zum Festlegen einer Flüssigkeitssäule verbunden sind, wobei die Fluidleitungen (26; 106) ausgebildet sind, um eine kapillare Befüllung der Einrichtungen zum Festlegen einer Flüssigkeitssäule zu ermöglichen.

7. Vorrichtung nach Anspruch 6, bei der die Flüssigkeitsreservoire (28, 32; 108; 202) in einem ersten Muster in einer ersten Oberfläche des Dosierkopfs angeordnet sind und die Düsenöffnungen (14; 104) in einem zweiten Muster in einer zweiten, der ersten Oberfläche gegenüberliegenden Oberfläche des Dosierkopfs gebildet sind, wobei sich das erste Muster und das zweite Muster unterscheiden, derart, daß zwischen den Flüssigkeitsreservoiren (28, 32; 108; 202) und den Düsenöffnungen (14; 104) eine Formatumwandlung stattfindet.

8. Vorrichtung nach einem der Ansprüche 1 bis 7, die ferner eine Entlüftungseinrichtung (44; 144) zur Entlüftung der Druckkammer (30; 118; 118') aufweist.

9. Vorrichtung nach einem der Ansprüche 1 bis 7, bei der die Flüssigkeitsreservoire (108) in einer ersten Hauptoberfläche des Dosierkopfs gebildet sind, wobei auf der ersten Hauptoberfläche eine Deckplatte (112) angeordnet ist, die eine oder mehrere Entlüftungsöffnungen (114) für die Flüssigkeitsreservoire (108) aufweist, deren Querschnittfläche kleiner als die der Flüssigkeitsreservoire (108) ist.

10. Vorrichtung nach einem der Ansprüche 1 bis 7 oder 9, die ferner eine Kühleinrichtung zur Kühlung von Flüssigkeit in den Flüssigkeitsreservoiren (108) aufweist.

11. Vorrichtung nach einem der Ansprüche 1 bis 10, bei der die Oberfläche des Dosierkopfs, in der die Düsenöffnungen (104) gebildet sind, mit einer Deckschicht (138) versehen ist, die im Bereich der Düsenöffnungen (104) eine Ausnehmung aufweist.

12. Vorrichtung nach einem der Ansprüche 1 bis 11, bei der der Dosierkopf an seinen seitlichen Rändern in der Oberfläche desselben, in der die Düsenöffnungen (104) gebildet sind, ausgenommene Abschnitte aufweist, die mit einer Halterung (130) Eingriff nehmen.

13. Vorrichtung nach Anspruch 12, bei der die Halterung (130) ferner als eine Vorrichtung zur Anlage einer Bevorratungseinrichtung zum Befüllen von in der Vorrichtung gesehenen Flüssigkeitsreservoiren (1.08) ausgebildet ist.

14. Vorrichtung nach einem der Ansprüche 1 bis 13, die ferner Grabenstrukturen (224) aufweist, die jeweilige Düsenöffnungen (104) umgeben, wobei die Grabenstrukturen (224) ausgebildet sind, um überschüssige, auf der Oberfläche, in der die Düsenöffnungen (104) gebildet sind, vorliegende Flüssigkeit kapillar zu binden.

15. Vorrichtung nach einem der Ansprüche 1 bis 14, bei der die Mehrzahl von Düsenöffnungen (14; 104) und die Einrichtung zum Festlegen einer Flüssigkeitssäule in einem Siliziumsubstrat (2; 102; 200) mikromechanisch gebildet sind.

16. Vorrichtung nach Anspruch 15, bei der auch die Flüssigkeitsreservoire (28, 32; 108; 202) und Fluidleitungen (26; 106) zumindest teilweise in dem Siliziumsubstrat (2; 102; 200) gebildet sind.

17. Vorrichtung nach Anspruch 15 oder 16, bei der die Druckkammer (30; 118) durch eine in einer auf das Siliziumsubstrat (2; 102) aufgebrachten Zwischenplatte (4; 110) gebildete Ausnehmung (30) gebildet ist.

18. Vorrichtung nach Anspruch 17, bei der die Zwischenplatte (4; 110) ferner strukturiert ist, um die Kapazität der Flüssigkeitsreservoire (28, 32; 108) zu vergrößern.

19. Vorrichtung nach Anspruch 1 oder 6, bei der die Flüssigkeitsreservoire (108) in der ersten Oberfläche des Dosierkopfs gebildet sind, wobei in den Flüssigkeitsreservoiren (108) kapillare Strukturen (246) angeordnet sind.

20. Dosierkopf für eine Vorrichtung nach einem der Ansprüche 1 bis 4, der ein Substrat (200) aufweist, das in einer ersten Oberfläche desselben die Mehrzahl von Düsenöffnungen (104) aufweist, das in einer der ersten Oberfläche gegenüberliegenden Oberfläche desselben eine Mehrzahl von Flüssigkeitsreservoiren (202) aufweist, und das jeweilige Düsenöffnungen (104) mit jeweiligen Flüssigkeitsreservoiren (202) verbindende Fluidleitungen (106) aufweist, die zumindest teilweise durch in der ersten/oder zweiten Oberfläche gebildete offene Gräben (106', 106'') gebildet sind, wobei die Gräben solche Tiefen- und Breiten-Abmessungen aufweisen, daß eine Flüssigkeit alleine durch eine Kapillarwirkung in denselben gehalten wird.

21. Dosierkopf nach Anspruch 20, bei dem die Fluidleitungen (106) Substratdurchführungen (208) besitzen, deren Strömungswiderstand kleiner als der Strömungswiderstand, der durch eine Düsenöffnung (104) definiert ist, ist.

22. Verfahren zum Erzeugen einer Durchführungsöffnung (208; 260) mit einer definierten Querschnittfläche in dem Substrat (200; 250) eines Dosierkopfs nach Anspruch 21, mit folgenden Schritten:
Erzeugen einer ersten länglichen Grabenstruktur (254) einer definierten Breite und Tiefe in einer ersten Oberfläche (252) des Substrats (250);
Erzeugen einer zweiten länglichen Grabenstruktur (258) mit einer definierten Breite und Tiefe in einer zweiten, der ersten Oberfläche gegenüberliegenden Oberfläche (256) des Substrats (250), derart, daß sich die erste und die zweite Grabenstruktur (254, 258) schneiden, so daß im Schnittbereich eine Öffnung (260) mit der definierten Querschnittfläche vorliegt.

## Claims

1. A device for applying a plurality of microdroplets onto a substrate, comprising:
a plurality of nozzle orifices (14; 104) in a dosing head;
a means for defining a liquid column of a medium (34) to be dosed at each nozzle orifice (14; 104)
a pressure chamber (30; 118; 118') which is adapted to be filled with a buffer medium and which is arranged in such a way that said buffer medium can simultaneously be used for applying a pressure to the liquid-column ends which are spaced apart from the nozzle orifices;
a pressure generator (8; 122, 124, 132, 134; 140, 142; 140') for applying a pressure to said buffer medium in such a way that a plurality of microdroplets will simultaneously be applied onto the substrate through said plurality of nozzle orifices; and
liquid reservoirs (28, 32; 108; 202) for the media (34) to be dosed, which are in fluid communication with the liquid columns on the nozzle orifices (14; 104).

2. A device according to claim 1, wherein the pressure generator is defined by a displacement diaphragm (8) and an associated actor (40).

3. A device according to claim 1, wherein the buffer medium is air and wherein the pressure generator includes a compressed-air supply device which is provided with a valve (124) and which is in fluid communication with the pressure chamber (118).

4. A device according to claim 1, wherein the pressure generator comprises a tappet (140; 140') and an actor (142), the buffer medium being adapted to have a pressure applied thereto by actuating the tappet (140; 140') by means of the actor (142).

5. A device according to one of claims 1 to 4, wherein the means for defining a liquid column on each nozzle orifice (14; 104) include a channel (15; 204) which leads to a respective nozzle orifice (14; 104) and which is adapted to be filled by a capillary effect.

6. A device according to one of claims 1 to 5, wherein the liquid reservoirs (28, 32; 108; 202) are connected via fluid lines (26; 106) to the means for defining a liquid column, said fluid lines (26; 106) being implemented such that they permit capillary filling of the means for defining a liquid column.

7. A device according to claim 6, wherein the liquid reservoirs (28, 32; 108; 202) are arranged in a first pattern in a first surface of the dosing head and wherein the nozzle orifices (14; 104) are formed in a second pattern in a second surface of the dosing head located opposite said first surface, the first and second patterns differing from one another in such a way that a format conversion takes place between the liquid reservoirs (28, 32; 108; 202) and the nozzle orifices (14; 104).

8. A device according to one of claims 1 to 7, comprising in addition a vent port (44; 144) for venting the pressure chamber (30; 118; 118').

9. A device according to one of claims 1 to 7, wherein the liquid reservoirs (108) are formed in a first main surface of the dosing head, said first main surface having arranged thereon a cover plate (112) provided with one or a plurality of vent holes (114) for the liquid reservoirs (108) whose cross-sectional area is smaller than that of the liquid reservoirs (108).

10. A device according to one of claims 1 to 7 or 9, comprising in addition a cooler for cooling the liquid in the liquid reservoirs (108).

11. A device according to one of claims 1 to 10, wherein the surface of the dosing head having the nozzle orifices (104) formed therein is provided with a cover layer (138) having a recess in the area of the nozzle orifices (104).

12. A device according to one of claims of 1 to 11, wherein the dosing head is provided with recessed portions on its lateral edges in the dosing-head surface having the nozzle orifices (104) formed therein, said recessed portions being brought into engagement with a holding device (130).

13. A device according to claim 12, wherein the holding device (103) is additionally implemented as a device for applying a supply so as to fill liquid reservoirs (108) provided in the device.

14. A device according to one of claims 1 to 13, additionally comprising trench structures (224) which surround respective nozzle orifices (104), said trench structures (224) being implemented for binding by means of capillary forces superfluous liquid on the surface having the nozzle orifices (104) formed therein.

15. A device according to one of claims 1 to 14, wherein the plurality of nozzle orifices (14, 104) and the means for defining a liquid column are micromechanically formed in a silicon substrate (2; 102; 200).

16. A device according to claim 15, wherein also the liquid reservoirs (28; 32; 108; 202) and the fluid lines (26; 106) are formed, at least partially, in the silicon substrate (2; 102; 200).

17. A device according to claim 15 or 16, wherein the pressure chamber (30; 118) is defined by a recess (30) formed in an intermediate plate (4; 110) which is applied to the silicon substrate (2; 102).

18. A device according to claim 17, wherein the intermediate plate (4; 110) is additionally patterned so as to increase the capacity of the liquid reservoirs (28; 32; 108).

19. A device according to claim 1 or 6, wherein the liquid reservoirs (108) are formed in the first surface of the dosing head, said liquid reservoirs (108) having arranged therein capillary structures (246).

20. A dosing head for a device according to one of claims 1 to 4, said dosing head comprising a substrate (200) having the plurality of nozzle orifices (104) in a first surface thereof, having a plurality of liquid reservoirs (202) in a surface thereof which is located opposite to said first surface, and having fluid lines (106) which connect respective nozzle orifices (104) to respective liquid reservoirs (202) and at least part of which is defined by open trenches (106', 106'') formed in said first or second surface, said trenches having depth and width dimensions of such a nature that a liquid will be retained therein by a capillary effect alone.

21. A dosing head according to claim 20, wherein the fluid lines (106) have substrate through-holes (208) whose flow resistance is smaller than the flow resistance defined by a nozzle orifice (104).

22. A method of producing a through-hole (208; 260) having a defined cross-sectional area in the substrate (200; 250) of a dosing head according to claim 21, said method comprising the steps of:
producing a first elongate trench structure (254) of defined width and depth in a first surface (252) of the substrate (250); producing a second elongate trench structure (258) of defined width and depth in a second surface (256) of the substrate (250) which is located opposite to said first surface, in such a way that said first and second trench structures (254, 258) intersect so that an opening (260) having a defined cross-sectional area is formed in the area of intersection.

## Revendications

1. Dispositif pour déposer une pluralité de micro-gouttelettes sur un substrat, aux caractéristiques suivantes :
une pluralité d'ouvertures de tuyère (14 ; 104) dans une tête de dosage ;
un dispositif pour établir une colonne de liquide d'un fluide à doser (34) à chaque ouverture de tuyère (14 ; 104) ;
une chambre à pression (30; 118; 118') pouvant être remplie d'un fluide-tampon et disposée de telle sorte que par le fluide-tampon puisse être exercée une pression simultanément sur les extrémités, distantes des ouvertures de tuyère (14 ; 104) des colonnes de liquide ;
un dispositif générateur de pression (8; 122, 124, 132, 134; 140, 142; 140') destiné à soumettre le fluide-tampon à une pression, de sorte qu'à travers la pluralité d'ouvertures de tuyère (14; 104) soient déposées simultanément une pluralité de micro-gouttelettes sur le substrat ; et
des réservoirs à liquide (28, 32 ; 108 ; 202) pour les fluides à doser (34), qui se trouvent en communication de fluide avec les dispositifs destinés à établir une colonne de liquide à une ouverture de tuyère (14 ; 104).

2. Dispositif selon la revendication 1, dans lequel le dispositif générateur de pression est constitué par une membrane de refoulement (8) et un actionneur (40) y associé.

3. Dispositif selon la revendication 1, dans lequel le fluide-tampon est de l'air et le dispositif générateur de pression présente un dispositif d'alimentation d'air sous pression (122), pourvu d'une soupape (124), qui se trouve en communication de fluide avec la chambre de pression (118).

4. Dispositif selon la revendication 1, dans lequel le dispositif générateur de pression présente un poussoir (140 ; 140') et un actionneur (142), le fluide-tampon pouvant être soumis à une pression en actionnant le poussoir (140 ; 140') à l'aide de l'actionneur (142).

5. Dispositif selon l'une des revendications 1 à 4, dans lequel le dispositif destiné à établir une colonne de liquide à chaque ouverture de tuyère (14; 104) comporte un canal (15 ; 204) menant à une ouverture de tuyère (14 ; 104) respective et pouvant être rempli par action capillaire.

6. Dispositif selon l'une des revendications 1 à 5, dans lequel les réservoirs à liquide (28, 32 ; 108 ; 202) sont reliés, par l'intermédiaire de conduits de fluide (26 ; 106), aux dispositifs destinés à établir une colonne de liquide, les conduits de fluide (26 ; 106) étant réalisés de manière à permettre un remplissage par action capillaire des dispositifs destinés à établir une colonne de liquide.

7. Dispositif selon la revendication 6, dans lequel les réservoirs à liquide (28, 32 ; 108 ; 202) sont disposés selon un motif dans une première surface de la tête de dosage et les ouvertures de tuyère (14 ; 104) sont formées selon un second motif dans une seconde surface, opposée à la première surface, de la tête de dosage, le premier motif et le second motif étant différents, de sorte qu'entre les réservoirs à liquide (28, 32 ; 108 ; 202) et les ouvertures de tuyère (14 ; 104) ait lieu une conversion de format.

8. Dispositif selon l'une des revendications 1 à 7, présentant, par ailleurs, un dispositif de purge d'air (44 ; 144) destiné à purger la chambre à pression (30 ; 118; 118').

9. Dispositif selon l'une des revendications 1 à 7, dans lequel les réservoirs à liquide (108) sont formés dans une première surface principale de la tête de dosage, sur la première surface principale étant disposée une plaque de recouvrement (112) présentant une ou plusieurs ouvertures de purge d'air (114) pour les réservoirs à liquide (108) dont la surface de section est plus petite que celle des réservoirs à liquide (108).

10. Dispositif selon l'une des revendications 1 à 7 ou 9, présentant, par ailleurs, un dispositif de refroidissement destiné à refroidir le liquide dans les réservoirs à liquide (108).

11. Dispositif selon l'une des revendications 1 à 10, dans lequel la surface de la tête de dosage dans laquelle sont formées les ouvertures de tuyère (104) est pourvue d'une couche de recouvrement (138) présentant un évidement à l'endroit des ouvertures de tuyère (104).

12. Dispositif selon l'une des revendications 1 à 11, dans lequel la tête de dosage présente, sur ses bords latéraux, dans la surface de cette dernière dans laquelle sont formées les ouvertures de tuyère (104), des segments retirés qui viennent en prise avec un support (130).

13. Dispositif selon la revendication 12, dans lequel le support (130) est, par ailleurs, réalisé sous forme de dispositif d'appui d'un dispositif d'approvisionnement destiné à remplir les réservoirs à liquide (108) vus dans le dispositif.

14. Dispositif selon l'une des revendications 1 à 13, présentant, par ailleurs, des structures de fossé (224) entourant les ouvertures de tuyère (104) respectives, les structures de fossé (224) étant réalisées pour lier par action capillaire l'excès de liquide présent sur la surface dans laquelle sont formées les ouvertures de tuyère (104).

15. Dispositif selon l'une des revendications 1 à 14, dans lequel la pluralité d'ouvertures de tuyère (14 ;104) et le dispositif destiné à établir une colonne de liquide sont formés dans un substrat en silicium (2; 102 ; 200) par des techniques micromécaniques.

16. Dispositif selon la revendication 15, dans lequel les réservoirs à liquide (28, 32 ; 108 ; 202) et les conduits de fluide (26 ; 106) sont également formés, au moins partiellement, dans le substrat en silicium (2 ; 102 ; 200).

17. Dispositif selon la revendication 15 ou 16, dans lequel la chambre à pression (30 ; 118) est formée par un évidement (30) formé dans une plaque intermédiaire (4 ; 110) placée sur le substrat en silicium (2 ; 102).

18. Dispositif selon la revendication 17, dans lequel la plaque intermédiaire (4 ; 110) est, par ailleurs, structurée pour augmenter la capacité des réservoirs à liquide (28, 32 ; 108).

19. Dispositif selon la revendication 1 ou 6, dans lequel les réservoirs à liquide (108) sont formés dans la première surface de la tête de dosage, dans les réservoirs à liquide (108) étant disposés des structures capillaires (246).

20. Tête de dosage pour un dispositif selon l'une des revendications 1 à 4, présentant un substrat (200) présentant, dans une première surface de celui-ci, la pluralité d'ouvertures de tuyère (104), présentant, dans une surface de celui-ci, opposée à la première surface, une pluralité de réservoirs à liquide (202) et présentant des conduits de fluide (106), reliant les ouvertures de tuyère (104) respectives aux réservoirs à liquide (202) respectifs, qui sont formés, au moins partiellement, par des fossés ouverts (106', 106") formés dans la première ou la seconde surface, les fossés présentant des dimensions de profondeur et de largeur telles qu'un liquide soit maintenu dans ceux-ci uniquement par une action capillaire.

21. Tête de dosage selon la revendication 20, dans laquelle les conduits de fluide (106) possèdent des passages de substrat (208) dont la résistance à l'écoulement est inférieure à la résistance à l'écoulement définie par une ouverture de tuyère (104).

22. Procédé pour réaliser une ouverture de passage (208 ; 260) à surface de section définie dans le substrat (200 ; 250) d'une tête de dosage selon la revendication 21, aux étapes suivantes consistant à :
générer une première structure de fossé allongée (254) d'une largeur et d'une profondeur définies dans une première surface (252) du substrat (250) ;
générer une seconde structure de fossé allongée (258) d'une largeur et d'une profondeur définies dans une seconde surface (256), opposée à la première surface, du substrat (250), de sorte que la première et la seconde structure de fossé (254, 258) se coupent, de sorte que soit présente, à l'endroit de l'intersection, une ouverture (260) à la surface de section définie.
